# EUROPEAN PATENT SPECIFICATION

(11) **EP 1 098 093 B1**
(45) Date of publication and mention of the grant of the patent: **13.09.2006**
(21) Application number: 00123823.7
(22) Date of filing: 02.11.2000
(51) Int. Cl.: F16B 13/12, F16B 13/02

(54) **Expansion plug for perforated brick walls and the like**
Spreizdübel für durchgebohrte Backsteinwände und dergleichen
Cheville expansible pour murs de briques perforés et équivalents

(30) Priority: 04.11.1999 IT MI992310
(43) Date of publication of application: 09.05.2001
(73) Proprietor: GIA S.p.A., 28069 Trecate (Novara) (IT)
(72) Inventor: Guaglio, Antonio, 28069 Trecate (Novara) (IT)
(74) Representative: Cicogna, Franco

(56) References cited:
- WO-A-92/14065
- FR-A- 2 341 059
- GB-A- 1 141 913

## Description

### BACKGROUND OF THE INVENTION

The present invention relates to an improved radial expanding plug, specifically designed for perforated or air brick walls and the like.

Expansion plugs generally comprising a collar coupled to two elongated semicircular flaps which can be introduced into a wall hole and can expand inside said hole, as a clamping screw is engaged herein, are already known.

The expansion of the mentioned semicircular flaps is designed for preventing the plug from being disengaged under pulling stresses.

However, the mentioned expansion plugs have been found to satisfactorily operate in the so-called "solid" walls, but they do not satisfactorily operate in walls made of perforated or air bricks, since, as the clamping screw is engaged, the plug wings are caused to diverge from one another and the engagement between the screw and plug is limited to the region of the collar plug.

Accordingly, the screw can easily swing, with a consequent danger of disengaging from the expansion plug.

Another drawback of the above mentioned expansion plugs is that, since the screw can be displaced and swing with respect to the plug, the thread engagement region is inevitably enlarged, with a further increase of a disengagement possibility.

For overcoming the above mentioned drawbacks, a further prior expansion plug comprises a tubular body having a longitudinal slit extending for the overall length thereof.

The hollow defined by the plug body is provided with a first larger diameter portion.

The document WO 92/14065 A is considered to be the most relevant state of the art and discloses a plug according to the preamble of Claim 1.

Though the latter expansion plug is adapted to satisfactorily operate in perforated brick walls, it has been found that it would be susceptible to further improvements.

### SUMMARY OF THE INVENTION

Accordingly, the aim of the present invention is to provide an improved expansion plug, specifically designed for perforated brick walls and the like, suitable to greatly reduce or fully eliminate any possibility of disengagement of the plug from the wall and of disengagement of the clamping screw for the hole, even if the clamping element or screw is subjected to great pulling stresses and swinging forces.

Within the scope of the above mentioned aim, a main object of the present invention is to provide such a radial expansion plug which can be easily used and is very reliable in operation.

Yet another object of the present invention is to provide such an expansion plug which is very simple construction wise and can be made at a very low cost.

According to one aspect of the present invention, the above mentioned aim and objects, as well as yet other objects, which will become more apparent hereinafter are achieved by an improved radial expansion plug, specifically designed for perforated brick walls and the like, comprising an elongated hollow body, adapted to be forcibly introduced into a hole having a diameter less than that of said plug and formed in a wall or the like, and to be engaged by a clamping screw, said body including a longitudinal slot extending substantially for the overall length of said body, which, as the plug is caused to enter the wall, closes on itself, and being characterized in that said plug further comprises a plurality of wings formed by cut-outs of U-shape of any other different geometrical shapes, formed in said body.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:
Figure 1 is an elevation view of the expansion plug according to the invention;
Figure 2 is a further elevation view, turned through 90° from the view of figure 1;
Figure 3 is a longitudinal cross sectional view substantially taken along the section plane III-III of figure 2;
Figure 4 is a longitudinal cross-sectional view substantially taken along the section plane IV-IV of figure 1;

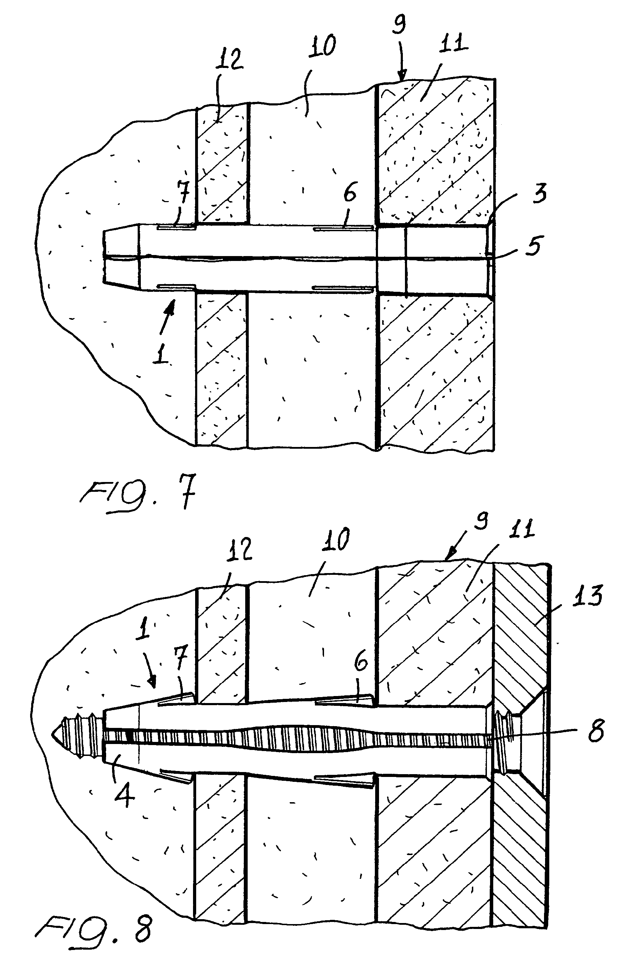

Figure 5 is a further cross-sectional view substantially taken along the cross section plane V-V of figure 2;
Figure 6 is a further cross-sectional view substantially taken along the cross-section plane VI-VI of figure 1;
Figure 7 is a side elevation view of the plug according to the invention, as applied to a hole of a wall and devoid of its clamping screw; and
Figure 8 is a view analogous to the preceding view but with the clamping screw engaged in the plug.

### DESCRIPTION OF THE PREFERRED EMBODIMENTS

With reference to the number references of the accompanying drawings, the plug according to the invention, generally indicated by the reference number 1, comprises a hollow body 2, of substantially cylindrical configuration, provided with a collar 3 at one end thereof, and a tapering portion 4 at the other end thereof, in order to facilitate the insertion of the body 2 into a hole formed in a wall.

The plug body 2, as shown, is longitudinally provided with a slit or slot 5, which extends either substantially through the overall length or partially through the overall length of said body 2 to favour any resilient deformations in the radial direction of the body 2, which is advantageously made of a plastics material.

More specifically, the body 2 is provided, at opposite mirror like positions with respect to the arrangement of the slit 5, with a plurality of U-shape cut-outs adapted to define corresponding wings 6 and 7.

In particular, a first pair of wings 6 arranged nearer the collar 3 and a second pair of wings 7 arranged nearer the tapering portion 4 are herein shown.

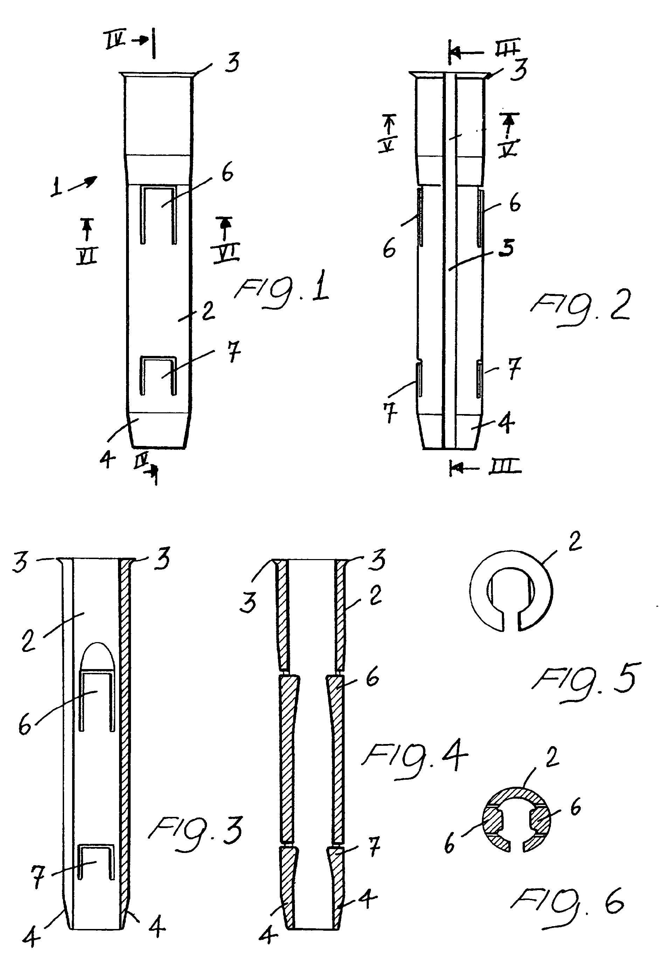

As is clearly illustrated in figure 4, at the two inner walls of the plug and mainly at the mentioned wings 6 and 7, the body 2 has an increased thickness thereby, as a clamping screw 8 is introduced into the hollow body 2, which has a less diameter, the walls, and mainly said wings, will be forced outward of said hollow body 2.

The expansion plug according to the invention, and as above disclosed, operates as follows.

After having formed a hole in a wall, for example formed by perforated or air bricks 9 having a gap 10 between two walls, i.e. an outermost wall 11 and an innermost wall 12, the plug 1 is introduced into said hole, in a per se-known manner.

As the clamping screw 8 is inserted into the hollow body 2, by a screwing-on type of operation, in order to clamp or lock an element 13 on the wall, the screw 8 will outward push the wings 6 and 7 to interfere against the walls respectively 11 and 12, as is clearly shown in figure 8.

In actual practice it has been found that the invention fully achieves the intended aim and objects, since an improved expansion plug is provided thereby which cannot be disengaged from its hole even if the clamping element or screw is subjected to very great pulling forces and swinging forces.

The expansion plug according to the present invention is susceptible to several modifications and variations, all of which will come within the scope of the invention.

All of the constructional detail can be replaced by other technically equivalent elements.

In practicing the invention, the used materials, as well as the contingent size and shapes can be any, depending on requirements and on the status of the art.

## Claims

1. An improved radial expansion plug (1), specifically designed for a perforated brick wall and the like, comprising an elongated hollow body (2) having a substantially circular outer wall, and a circular inner hole and adapted to be forcibly introduced into a hole of said wall having a diameter less than that of said hollow body and to be engaged by a clamping screw, said body (2) including a longitudinal slot (5) extending substantially for the overall length of said body (2) which, as the plug is caused to enter said brick wall, closes on itself, **characterized in that** said plug is formed of a plastics material and further comprises a plurality of wings (6, 7) formed by cut-outs of U-shape or of any other different geometrical shapes, formed in said body, **in that**, with said clamping screw not engaged in said hole of said hollow body (2), said wings are arranged substantially flush with said outer wall of said hollow body, that said wings are arranged by pairs, each of which comprises two diametrically opposite wings, at opposite mirror like positions with respect to said longitudinal slot (5), and that, as said clamping screw is introduced into said hole of said clamping body, said wings (6, 7) are forced outward by said screw so as to lock said plug in said hole of said brick wall.

2. A plug according to claim 1, **characterized in that** said plug comprises a first pair of wings arranged nearer a first end of said body and a second pair of wings, slightly larger than the wings of said first pair, arranged nearer a second end of said body.

3. A plug according to claim 1, **characterized in that** one end of said body (2) comprises a collar (3) and the other end of said body comprises a tapering portion (4).

4. A plug according to claim 1, **characterized in that** said hollow body has, at said wings (6, 7), walls which are so thickened as to facilitate said clamping screw in outward deflecting said wings as said clamping screw is forcibly introduced into said hollow body.

## Patentansprüche

1. Verbesserter Radialspreizdübel (1), der speziell für eine durchbrochene Ziegelmauer und dergleichen konstruiert ist und einen länglichen Hohlkörper (2) mit einer im Wesentlichen kreisförmigen Außenwand und einem kreisförmigen Loch im Inneren umfasst und dafür vorgesehen ist, unter Krafteinwirkung in ein Loch in der Mauer eingeführt zu werden, wobei der Durchmesser des Loches kleiner ist als der Durchmesser des Hohlkörpers und von einer Klemmschraube in Eingriff genommen wird, wobei der Körper (2) einen Längsschlitz (5) enthält, der sich im Wesentlichen über die gesamte Länge des Körpers (2) erstreckt und, wenn der Dübel in die Ziegelmauer hineingetrieben wird, sich von selbst schließt, **dadurch gekennzeichnet, dass** der Dübel aus einem Kunststoffmaterial besteht und des Weiteren mehrere Flügel (6, 7) umfasst, die mittels U-förmiger Ausschnitte oder mittels Ausschnitten mit sonstigen anderen geometrischen Formen in dem Körper ausgebildet sind, und dass, wenn die Klemmschraube nicht in dem Loch des Hohlkörpers (2) in Eingriff genommen ist, die Flügel im Wesentlichen bündig mit der Außenwand des Hohlkörpers angeordnet sind, und dass die Flügel paarweise angeordnet sind, wobei jedes Paar zwei diametral entgegengesetzte Flügel an einander gegenüberliegenden gespiegelten Positionen in Bezug auf den Längsschlitz (5) umfasst, und dass, wenn die Klemmschraube in das Loch in dem Klemmkörper eingeführt wird, die Flügel (6, 7) durch die Schraube dergestalt nach außen gedrückt werden, dass der Dübel in dem Loch in der Ziegelmauer arretiert wird.

2. Dübel nach Anspruch 1, **dadurch gekennzeichnet, dass** der Dübel ein erstes Paar Flügel, die näher an einem ersten Ende des Körpers angeordnet sind, und ein zweites Paar Flügel umfasst, die geringfügig größer sind als die Flügel des ersten Paares und näher an einem zweiten Ende des Körpers angeordnet sind.

3. Dübel nach Anspruch 1, **dadurch gekennzeichnet, dass** ein Ende des Körpers (2) einen Bund (3) umfasst und das andere Ende des Körpers einen verjüngten Abschnitt (4) umfasst.

4. Dübel nach Anspruch 1, **dadurch gekennzeichnet, dass** der Hohlkörper an den Flügeln (6, 7) Wände aufweist, die eine solche Verdickung aufweisen, dass die Klemmschraube bei dem Vorgang des Auswärtsbiegens der Flügel unterstützt wird, wenn die Klemmschraube unter Krafteinwirkung in den Hohlkörper eingeführt wird.

## Revendications

1. Cheville à expansion radiale (1) améliorée, conçue spécifiquement pour un mur de brique perforé et autres, comprenant un corps creux allongé (2) ayant une paroi externe substantiellement circulaire et un trou circulaire interne, et conçue pour être entrée de force dans un trou dudit mur ayant un diamètre inférieur à celui dudit corps creux et pour être emboîtée avec une vis de serrage, ledit corps (2) présentant une fente longitudinale (5) s'étendant substantiellement sur toute la longueur dudit corps (2) qui, lorsque la cheville est entrée dans ledit mur de brique, se referme, **caractérisée en ce que** ladite cheville est constituée d'une matière plastique et comprend en outre une pluralité d'ailettes (6, 7) formées par des découpes en forme de U ou avec d'autres formes géométriques différentes formées dans ledit corps, **en ce que**, lorsque ladite vis de serrage n'est pas engagée dans ledit trou dudit corps creux (2), lesdites ailettes sont substantiellement alignées avec ladite paroi externe dudit corps creux, **en ce que** lesdites ailettes sont disposées par paires, chacune de ces paires comprenant deux ailettes diamétralement opposées, à des positions symétriques par rapport à ladite fente longitudinale (5) et **en ce que**, lorsque ladite vis de serrage est introduite dans ledit trou dudit corps de serrage, lesdites ailettes (6, 7) sont forcées vers l'extérieur par ladite vis de façon à bloquer ladite cheville dans ledit trou dudit mur de brique.

2. Cheville selon la revendication 1, **caractérisée en ce que** ladite cheville comprend une première paire d'ailettes plus proche d'une première extrémité dudit corps et une seconde paire d'ailettes, légèrement plus grandes que les ailettes de ladite première paire, plus proches d'une seconde extrémité dudit corps.

3. Cheville selon la revendication 1, **caractérisée en ce qu'**une extrémité dudit corps (2) comprend un collet (3) et l'autre extrémité dudit corps comprend une portion conique (4).

4. Cheville selon la revendication 1, **caractérisée en ce que** ledit corps creux présente, au niveau desdites ailettes (6, 7), des parois qui s'épaississent afin de faciliter la déformation vers l'extérieur desdites ailettes par ladite vis de serrage lorsque ladite vis de serrage est introduite de force dans ledit corps creux.
